# EUROPÄISCHE PATENTANMELDUNG

(11) **EP 4 582 241 A1**
(43) Veröffentlichungstag der Anmeldung: **09.07.2025**
(21) Anmeldenummer: 24150383.8
(22) Anmeldetag: 04.01.2024
(51) Int. Cl.: B29C 64/386, B23K 9/04, B29C 64/118, B33Y 10/00, B33Y 50/00, B22F 10/18, B22F 10/80, B29C 64/307

(54) **VERFAHREN ZUM BETREIBEN EINER DREIDIMENSIONALEN-DRUCKEINRICHTUNG MITTELS EINER ELEKTRONISCHEN RECHENEINRICHTUNG, COMPUTERPROGRAMMPRODUKT COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Rothbauer, Stefan, 86156 Augsburg (DE); Salecker, Jürgen, 81827 München (DE)
(74) Vertreter: Siemens Patent Attorneys

(57) **Zusammenfassung**

Die Erfindung betrifft ein Verfahren zum Betreiben einer Dreidimensionalen-Druckeinrichtung (10) mittels einer elektronischen Recheneinrichtung (16), mit den Schritten: Bereitstellen von zumindest einem Gewicht (20) von zumindest einem Filaments (14) auf zumindest einer Filamentrolle (12) mittels der elektronischen Recheneinrichtung (16); Erzeugen eines Druckauftrags für die Dreidimensionale-Druckeinrichtung (10) mittels der elektronischen Recheneinrichtung (16); Bestimmen zumindest eines Filamentverbrauchs des zumindest einen Filaments (14) in Abhängigkeit von dem Druckauftrag mittels der elektronischen Recheneinrichtung (16); und Ausgeben einer Verbrauchsinformation (22) für den Druckauftrag in Abhängigkeit von dem bestimmten Filamentverbrauch und in Abhängigkeit von dem bereitgestellten Gewicht (20) mittels der elektronischen Recheneinrichtung (16). Ferner betrifft die Erfindung ein Computerprogrammprodukt, ein computerlesbares Speichermedium sowie eine Dreidimensionale-Druckeinrichtung (10).

## Beschreibung

Die nachfolgende Erfindung betrifft ein Verfahren zum Betreiben einer Dreidimensionalen-Druckeinrichtung mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Druckvorgänge bei Dreidimensionalen-Druckeinrichtungen, welche auch als 3D-Drucker bezeichnet werden, sind zeit- und materialintensiv. Fehler im Druckprozess, die nicht erkannt werden, führen zu unnötigem Materialverbrauch und zu zusätzlichen Auslastungen der Maschine, die damit nicht für weitere Druckvorgänge zur Verfügung steht und auch weiterhin abgenutzt wird. Das reduziert sowohl die Wirtschaftlichkeit als auch die Nachhaltigkeitsbilanz dieses Fertigungsverfahrens.

Insbesondere bei sogenannten semi-professionellen 3D-Druckern gibt es derzeit keine Erkennung, dass ein Filamentstau aufgetreten ist. Dieses Problem tritt unter anderen mit den semi-professionellen Druckern auf, der Drucker druckt dann bis zum manuellen Stopp des Druckprozesses "Luft". Aufgrund dieses langen "Luftdruckens" hat sich Filament oftmals im Extruder gestaut und verklebt, eine Säuberungsaktion dauert mehrere Stunden und hätte vermieden werden können, wenn insbesondere das Problem früher hätte erkannt werden können.

Solche Staus können aus verschiedenen Gründen, beispielsweise aufgrund eines Klemmens der Filamentrolle, der Extruder ist zu schwach eingestellt und schafft es nicht, das Filament zu transportieren, der Extrudermotor ist defekt oder dergleichen auftreten.

Dabei kann es für den Nutzer sehr ärgerlich sein, wenn ein Stau nicht zeitnah erkannt wird, denn meistens ist das zugrundeliegende Problem trivial und kann schnell behoben werden.

Sehr oft liegen die Druckzeiten bei dreidimensionalen Druckern im Bereich von mehreren Stunden, beziehungsweise in einer Fertigungshalle sind davon eventuell eine Großzahl von Druckern im Betrieb. Umso wichtiger ist das rechtzeitige Erkennen solch eines Problems. Die hohen Investitionskosten für die Drucker lohnen für den Betreiber nur, wenn der Drucker nahezu vollständig ausgelastet ist und korrekte Endergebnisse produziert. Unproduktive Zeiten im Druck, insbesondere sogenanntes Luftdrucken beziehungsweise ein Ergebnis ist nicht verwendbar und die dadurch entstehende Wiederholung des Druckprozesses sind somit ein großes Problem für das wirtschaftliche Betreiben von dreidimensionalen Druckern. Auch verlängerte Stillstandszeiten aufgrund der oben genannten Probleme bei spätem Erkennen tragen hierzu bei. Daneben spielen die Materialkosten für das unnötig verbrauchte Material beziehungsweise für die Fehldrucke verwendeten Rohstoffe eine Rolle. Unnötige Materialverwendung trägt auch dazu bei, dass die Nachhaltigkeitsbilanz dieses Fertigungsverfahrens schlechter ist, als sie sein könnte.

Insbesondere sind ferner die Druckvorgänge bei den Dreidimensionalen-Druckern sehr zeit- und materialintensiv, die Dauer eines Druckvorgangs und auch das dazu benötigte Material ist ausreichend genau bekannt, jedoch gibt es keine verlässlichen Informationen, ob beispielsweise alle Filamentrollen ausreichend mit Material bestückt sind, sodass der Druckvorgang auch vollständig durchgeführt werden kann, und auch nicht, wann beispielsweise eine Filamentrolle ausgetauscht werden müsste. Insbesondere im semi-professionellen Bereich gibt es keine Möglichkeit, dass diese Informationen von dem 3D-Drucker beispielsweise zusammen mit einem sogenannten "Slicer" dem Benutzer zur Verfügung gestellt werden.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen ein verbesserter Druck eines Produkts innerhalb einer Dreidimensionalen-Druckeinrichtung durchgeführt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben einer Dreidimensionalen-Druckeinrichtung mittels einer elektronischen Recheneinrichtung. Es wird zumindest ein Gewicht von zumindest einem Filament auf zumindest einer Filamentrolle mittels der elektronischen Recheneinrichtung bereitgestellt. Es erfolgt das Erzeugen eines Druckauftrags für die Dreidimensionale-Druckeinrichtung mittels der elektronischen Recheneinrichtung. Es wird zumindest ein Filamentverbrauch des zumindest einen Filaments in Abhängigkeit von dem Druckauftrag mittels der elektronischen Recheneinrichtung bestimmt, und es wird eine Verbrauchsinformation für den Druckauftrag in Abhängigkeit von dem bestimmten Filamentverbrauch und in Abhängigkeit von dem bereitgestellten Gewicht mittels der elektronischen Recheneinrichtung ausgegeben.

Insbesondere kann somit ein verbesserter Druck eines Produkts mittels der Dreidimensionalen-Druckeinrichtung realisiert werden. Insbesondere kann die Verbrauchsinformation beispielsweise auf einer entsprechenden Ausgabeeinrichtung, beispielsweise einem Display, der Dreidimensionalen-Druckeinrichtung bereitgestellt werden. Beispielsweise kann somit der Nutzer sehen, ob genügend Filament vorhanden ist, um den Druck des Produkts entsprechend durchführen zu können. Alternativ kann vorgesehen sein, dass beispielsweise dem Nutzer angezeigt wird, dass entsprechend nicht genügend Filament vorhanden ist und ab wann beispielsweise ein Tausch einer Filamentrolle notwendig ist, um den Druckvorgang abschließen zu können. Somit können Stillstandszeiten der Dreidimensionalen-Druckeinrichtung verhindert werden, da der Nutzer frühzeitig in Kenntnis gesetzt ist, ob der Druckvorgang realisierbar ist und/oder wann zumindest eine Filamentrolle entsprechend zu tauschen ist. Dies erhöht ferner auch den Komfort sowie reduziert, wie bereits erwähnt, die entsprechenden Stillstandszeiten.

Dabei ist das Bestimmen des Filamentverbrauchs insbesondere als Verbrauchvorhersage zu betrachten.

Gemäß einer vorteilhaften Ausgestaltungsform wird als Verbrauchsinformation bestimmt, ob das Filament ausreichend für den Druckauftrag ist. Insbesondere kann somit in Abhängigkeit des Druckauftrags und in Abhängigkeit des Gewichts, welches auf der Filamentrolle für das Filament vorhanden ist, bestimmt werden, ob der Druckauftrag durchführbar beziehungsweise realisierbar ist. Sollte beispielsweise der Druckauftrag nicht realisierbar sein, so kann dies auf einer Anzeigeeinrichtung entsprechend angezeigt werden, sodass der Nutzer in Kenntnis gesetzt ist, dass der Druckauftrag mit dieser Filamentrolle beispielsweise nicht durchführbar ist beziehungsweise dass beispielsweise ein Wechsel einer Filamentrolle während des Druckvorgangs durchzuführen ist. Somit kann verbessert ein Druck eines Produkts mittels der Dreidimensionalen-Druckeinrichtung realisiert werden.

Ebenfalls vorteilhaft ist, wenn als Verbrauchsinformation ein Zeitpunkt für einen Filamentrollenwechsel bestimmt wird. Beispielsweise kann bestimmt werden, sollte das vorhandene Filament nicht für den Druck ausreichen, dass ein Filamentrollenwechsel durchzuführen ist. Hierzu kann insbesondere ein Zeitpunkt bestimmt werden, wann der Filamentrollenwechsel durchzuführen ist. Dies kann beispielsweise dem Nutzer auf der Ausgabeeinrichtung angezeigt werden, sodass dieser entsprechend zum korrekten Zeitpunkt einen Filamentrollenwechsel durchführen kann. Somit können Stillstandszeiten mittels der Dreidimensionalen-Druckeinrichtung verhindert werden.

Alternativ oder ergänzend kann auch vorgesehen sein, dass die Überprüfung ob für den Rest-Druckauftrag die Filamentmenge noch ausreicht auch periodisch ausgeführt wird, so dass bei z. B. höherem Verbrauch im Druckverlauf als vor Druckbeginn bestimmt, der Nutzer eine Warnung erhalten kann.

Ebenfalls vorteilhaft ist, wenn der Zeitpunkt an einen Nutzer übertragen wird. Beispielsweise kann der Zeitpunkt auf ein mobiles Endgerät, beispielsweise ein Smartphone, entsprechend übertragen werden. Insbesondere kann das Smartphone eine entsprechende Applikation aufweisen, welche beispielsweise mit der Dreidimensionalen-Druckeinrichtung kommuniziert. Es kann dann vorgesehen sein, dass der Zeitpunkt entsprechend an das Smartphone übertragen wird, sodass der Nutzer in Kenntnis gesetzt ist, wann der Zeitpunkt ist, um einen Filamentrollenwechsel durchzuführen. Hierzu können beispielsweise entsprechende Push-Nachrichten genutzt werden, sodass der Nutzer zuverlässig in Kenntnis gesetzt werden kann.

Dabei kann ferner vorgesehen sein, dass der Nutzer vor dem bestimmten Zeitpunkt innerhalb einer vorgegebenen Zeitspanne gewarnt wird. Hierzu kann beispielsweise vorgesehen sein, dass zehn Minuten vor einem Ende der Filamentrolle eine entsprechende Warnung des Nutzers durchgeführt wird. Somit hat der Nutzer ausreichend Zeit, um entsprechend den Filamentrollenwechsel durchführen zu können. Dies reduziert Stillstandszeiten und erhöht den Komfort für den Dreidimensionalen-Druck.

Weiterhin vorteilhaft ist, wenn mittels eines Gewichtssensors für die Filamentrolle das Gewicht bestimmt wird. Insbesondere kann somit aktuell das Gewicht der Filamentrolle bestimmt werden. Somit kann zuverlässig bestimmt werden, ob genügend Filament auf der Filamentrolle vorhanden ist. Der Gewichtssensor kann dabei bevorzugt an der Filamentrolle ausgebildet sein und ein aktuelles Gewicht der Filamentrolle erfassen.

Es hat sich weiterhin als vorteilhaft erwiesen, wenn der Gewichtssensor eine Genauigkeit von im Wesentlichen +/-100 Gramm, insbesondere +/-50 Gramm, insbesondere +/-20 Gramm, insbesondere +/-15 Gramm, insbesondere +/-10 Gramm, insbesondere +/-5 Gramm aufweist. Insbesondere, je nachdem welche Druckereinrichtung vorhanden ist, kann eine entsprechende Genauigkeit gewählt werden. Insbesondere bei entsprechenden semi-professionellen Anlagen ist bevorzugt eine Genauigkeit von +/-15 Gramm vorgesehen, da die entsprechenden Druckaufträge in ähnlichen Schritten arbeiten.

Eine weitere vorteilhafte Ausgestaltungsform sieht vor, dass ein Taragewicht der Filamentrolle beim Vorgeben des Gewichts berücksichtigt wird. Beispielsweise kann beim Erstinstallieren der Filamentrolle ein entsprechendes Nettogewicht an Filament, welches beispielsweise auf der Verpackung ausgeschrieben ist, in die elektronische Recheneinrichtung eingegeben werden. Der Gewichtssensor kann dann das Gesamtgewicht bestimmen und daraus das Taragewicht ableiten. Somit ist die elektronische Recheneinrichtung in Kenntnis gesetzt, wie viel Filament tatsächlich vorhanden ist, da insbesondere das Taragewicht nun mit herausgerechnet werden kann. Somit kann zuverlässig ein Produkt zuverlässig gedruckt werden.

Ebenfalls vorteilhaft ist, wenn der Filamentverbrauch auf Basis eines G-Codes für den Druckauftrag bestimmt wird. Beispielsweise kann hierzu vorgesehen sein, dass der Druckauftrag mittels des G-Codes erzeugt wird. Mittels des G-Codes können die entsprechenden einzelnen Slices bestimmt werden. Auf Basis der einzelnen Slices ist es nun ermöglicht, dass der Filamentverbrauch bestimmt werden kann. Somit lässt sich zuverlässig der Filamentverbrauch vorhersagen und beispielsweise auch, ob genügend Filament vorhanden ist.

Ebenfalls vorteilhaft ist, wenn die Verbrauchsinformation für eine Vielzahl von Filamenten auf eine Vielzahl von Filamentrollen erzeugt wird. Beispielsweise beim mehrfarbigen Druck steht eine Vielzahl von unterschiedlichen Filamentrollen mit Filamenten bereit. Es kann nun bestimmt werden, pro Filamentrolle, ob für den Druckauftrag genügend Filament entsprechend vorhanden ist. Somit können auch komplexe Druckaufträge auf Basis des vorgestellten Verfahrens durchgeführt werden.

Dabei kann weiterhin vorgesehen sein, dass ein ursprüngliches Gewicht der Filamentrolle über eine Eingabeeinrichtung durch einen Nutzer erfasst wird, und das ursprüngliche Gewicht beim Bestimmen der Verbrauchsinformation berücksichtigt wird. Insbesondere kann die Eingabeeinrichtung beispielsweise an der elektronischen Recheneinrichtung mitausgebildet sein. Auf Basis einer Beschriftung der Filamentrolle bei der ursprünglichen Installation kann das ursprüngliche Gewicht eingegeben werden. Insbesondere kann das ursprüngliche Gewicht entsprechend abgespeichert werden. Ferner können die Druckaufträge, welche bereits mit der Filamentrolle getätigt wurden, ebenfalls mitabgespeichert werden. Somit kann die elektronische Recheneinrichtung das Restgewicht des Filaments zuverlässig bestimmen. Dadurch kann ein verbesserter Druck eines Produkts realisiert werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit zumindest dem Computerprogrammprodukt nach dem vorhergehenden Aspekt.

Ein weiterer Aspekt der Erfindung betrifft eine elektronische Recheneinrichtung für eine Dreidimensionale-Druckeinrichtung, wobei die elektronische Recheneinrichtung zum Durchführen des Verfahrens ausgebildet ist. Insbesondere wird das Verfahren mittels der elektronischen Recheneinrichtung durchgeführt.

Ein nochmals weiterer Aspekt der Erfindung betrifft eine Dreidimensionale-Druckeinrichtung mit zumindest einer elektronischen Recheneinrichtung und zumindest einer Filamentrolle.

Vorteilhafte Ausgestaltungsformen des Verfahrens sind als vorteilhafte Ausgestaltungsformen des Computerprogrammprodukts, des computerlesbaren Speichermediums, der elektronischen Recheneinrichtung sowie der Dreidimensionalen-Druckeinrichtung anzusehen. Die elektronische Recheneinrichtung sowie die Dreidimensionale-Druckeinrichtung weisen hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch:
"application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

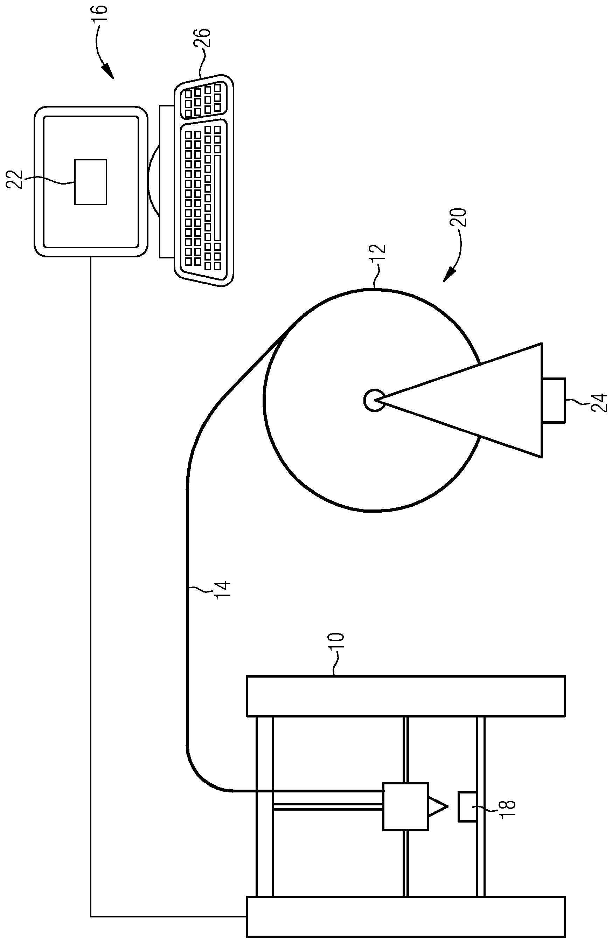

Dabei zeigt die einzige Figur eine schematische Ansicht einer Ausführungsform einer Dreidimensionalen-Druckeinrichtung mit einer Ausführungsform einer elektronischen Recheneinrichtung.

In der Figur sind gleiche oder funktionsgleiche Elemente mit den gleichen Bezugszeichen versehen.

Die Figur (FIG) zeigt in einer schematischen Ansicht eine Ausführungsform einer Dreidimensionalen-Druckeinrichtung 10. Die Dreidimensionale-Druckeinrichtung 10 weist im vorliegenden Ausführungsbeispiel zumindest eine Filamentrolle 12 mit einem Filament 14 sowie eine elektronische Recheneinrichtung 16 auf. Mittels der Dreidimensionalen-Druckeinrichtung 10 kann insbesondere ein Produkt 18 hergestellt beziehungsweise gedruckt werden.

Bei einem erfindungsgemäßen Verfahren zum Betreiben der Dreidimensionalen-Druckeinrichtung 10 erfolgt das Bereitstellen von zumindest einem Gewicht 20 von dem zumindest einen Filament 14 auf der zumindest einen Filamentrolle 12 mittels der elektronischen Recheneinrichtung 16. Es wird ein Druckauftrag für die Dreidimensionale-Druckeinrichtung 10 mittels der elektronischen Recheneinrichtung 16 erzeugt. Es erfolgt das Bestimmen eines Filamentverbrauchs des zumindest einen Filaments 14 in Abhängigkeit von dem Druckauftrag mittels der elektronischen Recheneinrichtung 16 und das Ausgeben einer Verbrauchsinformation 22 für den Druckauftrag in Abhängigkeit von dem bestimmten Filamentverbrauch und in Abhängigkeit von dem bereitgestellten Gewicht 20 mittels der elektronischen Recheneinrichtung 16.

Dabei kann insbesondere vorgesehen sein, dass als Verbrauchsinformation bestimmt wird, ob das Filament 14 ausreichend für den Druckauftrag ist. Alternativ oder ergänzend kann als Verbrauchsinformation ein Zeitpunkt für einen Filamentrollenwechsel bestimmt werden. Dabei kann der Zeitpunkt beispielsweise an einen Nutzer der Dreidimensionalen-Druckeinrichtung 10 ausgegeben beziehungsweise übertragen werden. Ferner kann der Nutzer vor dem bestimmten Zeitpunkt innerhalb einer vorgegebenen Zeitspanne gewarnt werden.

Hierzu kann ebenfalls vorgesehen sein, dass mittels eines Gewichtssensors 24 für die Filamentrolle 12 das Gewicht 20 bestimmt wird. Der Gewichtssensor 24 kann dabei insbesondere eine Genauigkeit von im Wesentlichen +/-100 Gramm, insbesondere +/-50 Gramm, insbesondere +/-20 Gramm, insbesondere +/-15 Gramm, insbesondere +/-10 Gramm, insbesondere +/-5 Gramm aufweisen.

Ebenfalls kann vorgesehen sein, dass ein Taragewicht der Filamentrolle 12 beim Vorgeben des Gewichts 20 berücksichtigt wird. Ferner kann hierzu insbesondere vorgesehen sein, dass ein ursprüngliches Gewicht der Filamentrolle 12 über eine Eingabeeinrichtung 26 der Filamentrolle 12 durch einen Nutzer erfasst wird und das ursprüngliche Gewicht beim Bestimmen der Verbrauchsinformation berücksichtigt wird.

Es kann ferner vorgesehen sein, dass der Filamentverbrauch auf Basis eines G-Codes für den Druckauftrag bestimmt wird. Ebenfalls kann vorgesehen sein, dass die Verbrauchsinformation für eine Vielzahl von Filamenten 14 auf einer Vielzahl von Filamentrollen 12 erzeugt wird.

Die Figur zeigt ferner, dass die Filamentrolle 12 extern zur Dreidimensionalen-Druckeinrichtung bereitgestellt werden kann.

Insbesondere sieht somit die Erfindung vor, dass beispielsweise jede Filamentrolle 12, sei diese intern in der Dreidimensionalen-Druckeinrichtung 10 oder auch extern dazu angeordnet, beispielsweise als Trockengehäuse für PVA/wasserlösliches Filament 14, wird mit dem jeweiligen Gewichtssensor 24 mit beispielsweise einer Genauigkeit von +/-15 Gramm ausgestattet. Beim Laden des Filamentabrollers beziehungsweise der Filamentrolle 12 wird das Nettogewicht des Filaments 14, welches insbesondere beispielsweise auf dem Lieferschein aufgebracht ist, an die elektronische Recheneinrichtung 16, die sich dabei innerhalb der Dreidimensionalen-Druckeinrichtung 10 befinden kann oder auch extern, beispielsweise auch in der Filamentrolle 12 ausgebildet sein kann, eingegeben. Durch die Eingabe des Nettogewichts kann die elektronische Recheneinrichtung 16 dann leicht das Taragewicht ausrechnen.

Nach dem Erstellen des Dreidimensionalen-Modells zum Beispiel auf Basis des G-Codes kann wiederum die entsprechende Datei dem sogenannten Slicer übergeben werden beziehungsweise geladen werden und dann mit der Software für den G-Code für den dreidimensionalen Druck übersetzt werden. Nach dieser Übersetzung liefert der Slicer dann wiederum die Informationen, wie lange beispielsweise der Druck dauert sowie wie viel Filament, sowohl als Gewicht 20 als auch in der Länge, verbraucht wird. Ferner kann auch ein Kostenpunkt für den Druck mitausgegeben werden.

Mit der Information, wie viel Filament 14 noch vorhanden ist, insbesondere durch das Wiegen, kann nun sehr einfach berechnet werden, ob der Druck vollständig durchgeführt werden kann, um, falls dies nicht der Fall ist, einen Zeitpunkt zu bestimmen, ab dem eine neue Filamentrolle 12 eingebaut werden muss.

Insbesondere im semi-professionellen Bereich hat dies die Vorteile, dass unproduktive Druckerstunden vermieden werden sowie insgesamt ein wirtschaftlicher nachhaltiger Betrieb ermöglicht wird.

## Patentansprüche

1. Verfahren zum Betreiben einer Dreidimensionalen-Druckeinrichtung (10) mittels einer elektronischen Recheneinrichtung (16), mit den Schritten:
- Bereitstellen von zumindest einem Gewicht (20) von zumindest einem Filaments (14) auf zumindest einer Filamentrolle (12) mittels der elektronischen Recheneinrichtung (16);
- Erzeugen eines Druckauftrags für die Dreidimensionale-Druckeinrichtung (10) mittels der elektronischen Recheneinrichtung (16);
- Bestimmen zumindest eines Filamentverbrauchs des zumindest einen Filaments (14) in Abhängigkeit von dem Druckauftrag mittels der elektronischen Recheneinrichtung (16); und
- Ausgeben einer Verbrauchsinformation (22) für den Druckauftrag in Abhängigkeit von dem bestimmten Filamentverbrauch und in Abhängigkeit von dem bereitgestellten Gewicht (20) mittels der elektronischen Recheneinrichtung (16).

2. Verfahren nach Anspruch 1, **dadurch gekennzeichnet, dass**
als Verbrauchsinformation (22) bestimmt wird, ob das Filament (14) ausreichend für den Druckauftrag ist.

3. Verfahren nach Anspruch 1 oder 2, **dadurch gekennzeichnet, dass**
als Verbrauchsinformation (22) ein Zeitpunkt für einen Filamentrollenwechsel bestimmt wird.

4. Verfahren nach Anspruch 3, **dadurch gekennzeichnet, dass**
der Zeitpunkt an einen Nutzer übertragen wird.

5. Verfahren nach Anspruch 4, **dadurch gekennzeichnet, dass**
der Nutzer vor dem bestimmten Zeitpunkt innerhalb einer vorgegebenen Zeitspanne gewarnt wird.

6. Verfahren nach einem der vorhergehenden Ansprüche, **dadurch gekennzeichnet, dass** mittels eines Gewichtssensors (24) für die Filamentrolle (12) das Gewicht (20) bestimmt wird.

7. Verfahren nach Anspruch 6, **dadurch gekennzeichnet, dass**
der Gewichtssensor (24) eine Genauigkeit von im Wesentlichen +/-100 Gramm, insbesondere +/-50 Gramm, insbesondere +/-20 Gramm, insbesondere +/-15 Gramm, insbesondere +/-10 Gramm, insbesondere +/-5 Gramm aufweist.

8. Verfahren nach einem der vorhergehenden Ansprüche, **dadurch gekennzeichnet, dass** ein Taragewicht der Filamentrolle (12) beim Vorgeben des Gewichts (20) berücksichtigt wird.

9. Verfahren nach einem der vorhergehenden Ansprüche, **dadurch gekennzeichnet, dass** der Filamentverbrauch auf Basis eines G-Codes für den Druckauftrag bestimmt wird.

10. Verfahren nach einem der vorhergehenden Ansprüche, **dadurch gekennzeichnet, dass** die Verbrauchsinformation (22) für eine Vielzahl von Filamenten (14) auf einer Vielzahl von Filamentrollen (12) erzeugt wird.

11. Verfahren nach einem der vorhergehenden Ansprüche, **dadurch gekennzeichnet, dass** die Filamentrolle (12) extern zur Dreidimensionalen-Druckeinrichtung (10) bereitgestellt wird.

12. Verfahren nach einem der vorhergehenden Ansprüche, **dadurch gekennzeichnet, dass** ein ursprüngliches Gewicht der Filamentrolle (12) über eine Eingabeeinrichtung (26) durch einen Nutzer erfasst wird, und das ursprüngliche Gewicht beim Bestimmen der Verbrauchsinformation (22) berücksichtigt wird.

13. Computerprogrammprodukt mit Programmcodemitteln, welche eine elektronische Recheneinrichtung (16) dazu veranlasst, wenn die Programmcodemittel von der elektronischen Recheneinrichtung (16) abgearbeitet werden, ein Verfahren nach einem der Ansprüche 1 bis 12 durchzuführen.

14. Computerlesbares Speichermedium mit zumindest einem Computerprogrammproduckt nach Anspruch 13.

15. Elektronische Recheneinrichtung (16) für eine Dreidimensionale-Druckeinrichtung (10),
wobei die elektronische Recheneinrichtung (16) zum Durchführen eines Verfahrens nach einem der Ansprüche 1 bis 12 ausgebildet ist.
